Europäisches Patentamt

(19) European Patent Office

Office européen des brevets

(11) Publication number: **0 045 102**
**B1**

(12) **EUROPEAN PATENT SPECIFICATION**

(45) Date of publication of patent specification: **10.10.84**

(21) Application number: **81200758.1**

(22) Date of filing: **03.07.81**

(51) Int. Cl.³: **G 03 B 27/52,** G 03 G 15/28

(54) Slit exposure device.

(30) Priority: **24.07.80 NL 8004250**

(43) Date of publication of application:
**03.02.82 Bulletin 82/05**

(45) Publication of the grant of the patent:
**10.10.84 Bulletin 84/41**

(84) Designated Contracting States:
**DE FR GB IT NL**

(56) References cited:
**DE-A-2 437 466**
**US-A-3 792 924**
**US-A-3 947 115**
**US-A-4 129 373**

(73) Proprietor: **Océ-Nederland B.V.**
**St. Urbanusweg 102**
**NL-5914 CC Venlo (NL)**

(72) Inventor: **Hovens, Petrus Johannes Petronella**
**Muntstraat 28**
**Tegelen (NL)**
Inventor: **Willemse, Adrianus Henricus**
**Burgemeester van Leentstraat 2**
**Grubbenvorst (NL)**

(74) Representative: **Bleukx, Lucas Lodewijk Maria,
Ir. et al**
**Océ-Nederland B.V. Patents & Information Dept.**
**Postbus 101**
**NL-5900 MA Venlo (NL)**

Courier Press, Leamington Spa, England.

## Description

This invention relates to a slit exposure device for projecting an image of an original onto a moving photosensitive element in belt form, which device comprises a stationary object plane, an exposure device for illuminating the original, and an optical system movable back and forth parallel to the stationary object plane.

Such slit exposure devices are known in various embodiments and are generally applied in copying machines. As a rule they employ optical systems projecting an image of a linear portion of the original onto the photosensitive element, e.g. a photoconductive element. For use in lower-volume copying machines, in particular, there is a growing interest in optical systems at present, which are built up of several rows of small lenses, each of them forming an erect image of a small portion of the linear portion of the original. If the small lenses are positioned correctly relative to each other, there is formed a mosaic of partial images of which the transitions are not visible, or scarcely so. Also, optical systems, which contain a plurality of imaging glass fibres bonded together in a few rows, are commercially available. The assembly is more or less in the form of a ruler of which the two big surfaces are parallel to the optical axes of the glass fibres. Such systems of imaging glass fibres, which form in principle the same image as the rows of small lenses, are marketed under the name "Selfoc arrays" and the like.

A slit exposure device utilizing an array of imaging glass fibres is described in the United States Patent Specification 4,129,373. By applying three reflective surfaces constituted by two prisms, a right-reading image of a stationary original is projected in linear portions onto a photoconductive element moving parallel to the plane of the original. In this process the optical system of imaging fibre array and prisms is moved at half the speed of the photoconductive element past the original.

The slit exposure device described in the United States Patent Specification is not always practicable, because the glass fibre array forms an image at a very short distance, e.g. 15 mm, from the outer ends of the fibres. Due to this small image space the use of three reflective surfaces with two prisms does not enable an image width larger than approximately 3 mm to be applied, because at a larger image width the prisms will be oversized and fit no longer in the image space. The result of this situation is that two prisms with three reflective surfaces can be used only in cases where the amount of light required is comparatively small.

Known from the United States Patent Specification 3,955,888 is a slit exposure device with a glass fibre array without reflective surfaces, for forming an image of a stationary original in linear portions on a photoconductive element. In this device the photoconductive element must be stopped during exposure. This has the consequence when using a comparatively long photoconductive element such as an endless belt, for example, that by a relatively prolonged influence the charging unit, developing unit and transfer unit cause local irregularities on the photoconductive element and, as a result, also on the images formed. In addition, the device according to the United States Specification 3,955,888 produces a mirror image. This does not present difficulties if the image after development, is transferred without intermediate to a sheet of receiving material. However, if a transfer unit with an intermediate for image is utilized, a right-reading image on the photosensitive element will be necessary and the application of an odd number of reflective surfaces is thereby required.

The slit exposure device according to the invention is a device as meant in the preamble, characterised in that it is provided with at least two interconnected deflecting rollers and with drive means for moving these rollers parallel with the optical system past the object plane, at least one deflecting roller deflecting the photosensitive element from its original direction of movement in the anti-clockwise direction and at least one deflecting roller deflecting the photosensitive element in the clockwise direction, and the optical system projecting the image in linear portions onto the photosensitive element within the path formed by the deflected parts and the part between the deflected parts of the photosensitive element.

The slit exposure device according to the invention eliminates the aforesaid disadvantages of both the known devices. On the one hand, the photosensitive belt need not be stopped during exposure and, on the other hand, the formation of a right-reading image on the photosensitive surface necessitates one mirror only, which requires less space than a construction with three reflective surfaces. Furthermore, the device according to the invention is advantageous in that critical setting of a complete image plane and provisions for keeping a large surface of the photosensitive element taut and flat are not necessary. It is a much simpler matter to keep the photosensitive element taut on the relatively small surface on or between the deflecting rollers. Moreover, the slit exposure device according to the invention retains the advantage that at the reproduction ratio of 1:1, which is the most usual one, the speed of the scanning device is half that of the photosensitive belt outside the deflecting rollers. In the slit exposure device according to the invention it is possible to couple the drive means for the deflecting rollers to those of the photosensitive belt in such a manner that the speed of the deflecting rollers alongside of the object plane remains always half the speed of the photosensitive belt outside the deflecting rollers, even when latter speed changes. This is accomplished by providing the deflecting rollers preferably with drive means which comprise a pulley or gear fixed to the shaft of one of the deflecting rollers with the aid of disconnectable clamping means, and a substantially stationary guide member which is arranged parallel to the object plane in a non-slip contact with the pulley on the gear.

The invention is further explained with reference to the following Figures.

Fig. 1 is a schematic cross section through an electrophotographic copying machine comprising a slit exposure device according to the invention.

Fig. 2 is the photoconductive belt and the slit exposure device according to Fig. 1, but shows that device in another position.

Fig. 3 is a diagram of a drive for the slit exposure device comprising the deflecting rollers of Figs. 1 and 2.

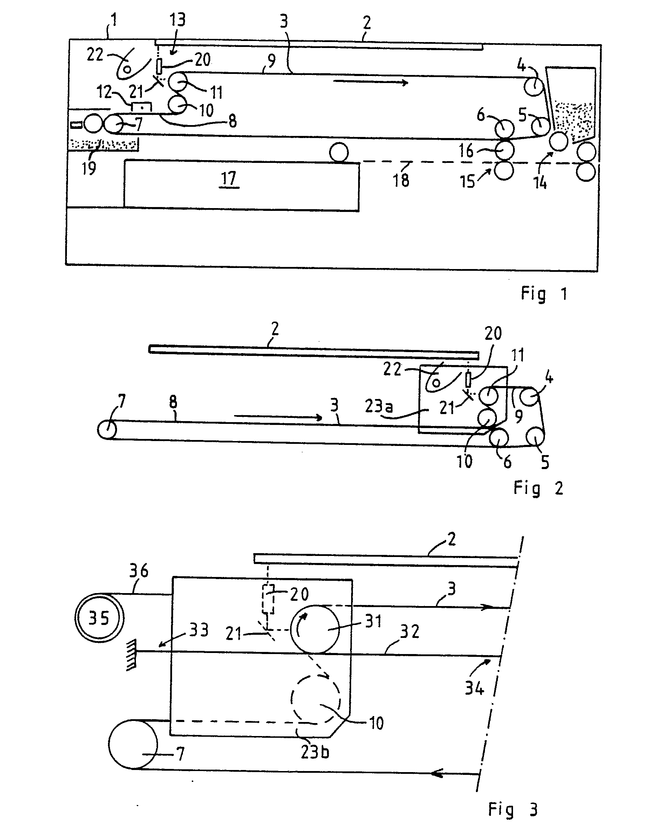

The copying machine according to Fig. 1 comprises an exposure plate 2 contained in the upper surface 1. Disposed at some distance below the exposure plate is an endless photoconductive belt 3 which circulates in the direction of the arrow over a plurality of transport rollers 4, 5, 6 and 7. The belt traverses two plane paths 8 and 9 parallel to the exposure plate, is deflected in the shape of an s from path 8 and is then curved back in path 9 by going around two superimposed deflecting rollers 10 and 11. Past roller 7 the belt subsequently passes through a charging unit 12, a slit exposure system of which the deflecting rollers 10 and 11 constitute part and which is generally designated as 13, a magnetic brush developing unit 14 for the development with one-component magnetizable developing powder, a transfer and fusing unit 15 which is provided with a roller 16 coated with silicone rubber to which powder images are transferred from the photoconductive belt and which in turn transfers the powder images to sheets of paper which, fed from a storage tray 17 located beneath the belt, are conveyed past roller 16 as shown by the broken line 18. Finally, the photoconductive belt passes through a magnetic cleaning unit 19, before passing the charging unit 12 again.

Near the deflecting rollers 10 and 11 a focussing glass fibre array 20, which consists of several rows of imaging glass fibres, is arranged perpendicularly to the exposure plate. Together these rows of imaging glass fibres are capable of reproducing a linear portion of an original placed on the exposure plate at the ratio of reproduction of 1:1. On the side of the focussing glass fibre array facing away from the exposure plate there is arranged a mirror 21 which, inclined at an angle of 45° to the exposure plate, projects the image formed by the array perpendicularly to the photoconductive belt, to the spot where the belt on the upper deflecting roller 11 moves perpendicularly to the exposure plate.

In this connection it must be noted that the image need not be projected to the indicated spot on the deflecting roller 11. By properly rotating the mirror it is also possible to project the image within the path between the deflecting rollers, which may optionally take up another position relative to one another. The image plane need not be perpendicular to the exposure plate either, but may take up another angle as far as adaptation of the position of the mirror permits the image to be projected perpendicularly to the photoconductive belt.

Disposed next to the focussing glass fibre array is a light source 22. This comprises a tubular light source and a narrow reflector by which the light is concentrated to create a linear bundle in the field of view of the focussing glass fibre array. The deflecting rollers 10 and 11, the focussing glass fibre array 20, the mirror 21 and the light source 22, together constituting part of the slit exposure device 13, are all mounted between two plates 23a and 23b arranged parallel to each other. The two plates, along with connecting rods mounted between the plates, form part of a carriage which on rails (not shown) can travel parallel to the exposure plate. Of the plates, which are arranged behind each other in Fig. 2, only the hindmost plate 23a is shown. During formation of the image, the carriage causes the slit exposure device 13 to move past the original (in Fig. 1 rightwardly) at half the speed at which the endless, circulating belt is driven. The formation of the image is completed when the slit exposure device will have reached the position shown in Fig. 2. The device is then returned to its starting position shown in Fig. 1. It is possible, of course, to finish the formation of the image at an earlier stage, if the length of the original is smaller than the maximum length that can be possibly scanned. Means known per se can be applied for that purpose, such as a mobile switch next to the object plane of the original, which switch reverses the direction of movement of the carriage once it is touched by a cam on that carriage.

The back and forth movement of the slit exposure device can be realized with the device shown schematically in Fig. 3.

For moving the deflecting rollers including the carriage attached to these and the rest of the slit exposure device past the object plane 2, a pulley 31 is fitted to rotate freely on the shaft of the deflecting roller 11, the pulley being arranged on the outer side of the carriage of which plate 23b is shown in Fig. 3. The pulley is provided with a magnetic clutch capable of clamping the pulley to the shaft of the deflecting roller 11.

Magnetic clutches in various forms of construction are known to the person skilled in the art and therefore they are not described here in detail. In a cross section through the tread, the diameter of the pulley is equal to that of the deflecting roller 11. A rope 32 had been passed over the pulley, so that the two ends 33 and 34 cross on the underside of the pulley, and these ends are fixed to opposed sides of the copying machine at such a level that the ends run parallel to the direction of movement of the slit exposure device. A spiral or volute spring 35 has the end that is located in the centre of the spiral attached to the copying machine near where the forward motion of the exposure starts (in the Figures to the left) and has the other end attached to the carriage of the slit exposure device by means of a cable 36.

In alternative embodiments of the drive for the deflecting rollers the pulley 31 has been replaced by a gear and the rope 32 by a rack which is pressed against the lower side of the gear and is fitted in the copying machine in the path of the rope ends. The spiral spring 35 can be replaced by a tension spring.

The operation of the drive means with the pulley-rope combination and that with gear-rack combination is equal, and is as follows:

When pulley 31 is clamped on the shaft of the deflecting roller 11, the continuously circulating photoconductive belt 3 causes this pulley to rotate in the direction of the arrow and to move rightwardly along the rope together with the rest of the slit exposure device connected to the pulley. The tope will then uncoil on the rear side (end 33) and coil on the front (end 34).

The speed at which the pulley moves past the object plane 2 is exactly half the speed of circulation of the photoconductive belt which in turn is driven by means of a motor coupled to the transport roller 6; but it is also possible to couple the motor to one of the transport rollers 4, 5 or 7, or to roller 16 coated with silicone rubber.

During the period the pulley 31 is clamped on the shaft of the deflecting roller 11, so during its movement to the right in the Figures, the photoconductive belt is subjected to imagewise exposure. On completion of the exposure, pulley 31 will be uncoupled from the shaft and the volute spring 35 will cause the complete slit exposure device to be retracted to the starting position.

In a further alternative embodiment of the drive the deflecting rollers have been closely spaced and a gear has been fitted on the shafts of either rollers. In that case a rack with teeth lying on sides facing each other has been fitted between the gears and in a non-slip contact with either gear. The operation is equal to that of the other drives.

The slit exposure device according to the invention allows of a simple method for exchanging the endless photoconductive belt. For that purpose it is possible to fit a holder rightward in the copying machine, near the transport roller 4. The carriage bearing the optical system can be moved towards the holder and the deflecting roller 11, after being disconnected from plates 23a and 23b of the carriage, can be fixed temporarily in the holder. The carriage and the rest of the optical system including the deflecting roller 10 can subsequently be moved to the left, as a result of which roller 11 will be released for removing the old photoconductive belt and fitting a fresh one.

## Claims

1. A slit exposure device for projecting an image of an original in linear portions onto a moving photosensitive element (9) in belt form, the device comprising a stationary object plate (2), an exposure device (22) for illuminating the original and an optical system (20, 21) movable back and forth parallel to said stationary object plane (2), characterised in that the slit exposure device is provided with at least two interconnected deflecting rollers (10, 11) and with drive means (6, 31, 32) for moving said rollers (10, 11) parallel with the optical system (20, 21) past the object plane (2), at least one deflecting roller deflecting the photosensitive element (9) from its original direction of movement in the anti-clockwise direction and at least one deflecting roller deflecting the photosensitive element (9) in the clockwise direction, and the optical system (20, 21) projecting the image in linear portions onto the photosensitive element (9) within the path formed by the deflected parts and the part between the deflected parts of the photosensitive element.

2. A slit exposure device according to claim 1, characterised in that the drive means (6, 31, 32) for the deflecting rollers (10, 11) comprise a pulley or gear (31) fixed to the shaft of one of said deflecting rollers with the aid of disconnectable clamping means, and a substantially stationary guide member (32) which is arranged in a non-slip contact with said pulley or gear (31) and is at least largely parallel to the object plane (2).

## Patentansprüche

1. Schlitzbelichtungseinrichtung zum zeilenförmigen Abbilden eines Originals auf ein sich bewegendes, bandförmiges fotoempfindliches Element (9), mit einer stationären Objektebene (2), einer Belichtungseinrichtung (22) zur Beleuchtung des Originals, sowie mit einem parallel zu der stationären Objektebene (2) hin und her beweglichen optischen System (20, 21), dadurch gekennzeichnet, dass die Schlitzbelichtungseinrichtung mit mindestens zwei miteinander verbundenen Umlenkrollen (10, 11) und mit einer Antriebseinrichtung (6, 31, 32) versehen ist, um die Rollen (10, 11) parallel zu dem optischen System (20, 21) an der Objektebene (2) vorbeizubewegen, wobei mindestens eine Umlenkrolle das fotoempfindliche Element (9) aus seiner ursprünglichen Bewegungsrichtung in Gegenuhrzeigersinn umlenkt, und mindestens eine Umlenkrolle das fotoempfindliche Element (9) in Uhrzeigersinn umlenkt, und dass das optische System (20, 21) die zeilenförmige Abbildung auf das fotoempfindliche Element (9) innerhalb der Bahn projiziert, die durch die umgelenkten Teile und den Teil zwischen den umgelenkten Teilen des fotoempfindlichen Elements gebildet wird.

2. Schlitzbelichtungseinrichtung nach Anspruch 1, dadurch gekennzeichnet, dass die Antriebseinrichtung (6, 31, 32) für die Umlenkrollen (10, 11) eine Riemenscheibe oder ein Zahnrad (31), die oder das an der Welle einer der Umlenkrollen mittels einer ausrückbaren Klemmeinrichtung befestigt ist, sowie ein im wesentlichen stationäres Führungsglied (32) das in Berührung ohne Schlupf mit der Riemenscheibe oder dem Zahnrad (31) und mindestens weitgehend parallel zu der Objektebene (2) angeordnet ist, aufweist.

**Revendications**

1. Dispositif d'éclairage par fente pour la projection d'une image d'un original en parties linéaires sur un élément photosensible (9) en mouvement en forme de courroie, le dispositif comprenant un plan objet stationnaire (2) un système d'exposition (22) pour éclairer l'original et un système optique (20, 21) mobile en avant et an arrière parallèlement au plan objet stationnaire (2), caractérisé en ce que le dispositif d'éclairage par fente est muni d'au moins deux galets déflecteurs interconnectés (10, 11) et de moyens d'entraînement (6, 31, 32) pour déplacer les galets (10, 11) parallèlement avec le système optique (20, 21) au-delà du plan objet (2), au moins un galet déflecteur déviant l'élément photosensible (9) de sa direction de déplacement originale, dans la direction contraire à celle des aiguilles d'une montre, et au moins un galet déflecteur déviant l'élément photosensible (9) dans la direction des aiguilles d'une montre, et le système optique (20, 21) projetant l'image en parties linéaires sur l'élément photosensible (9), dans le chemin formé par les parties déviées et la partie entre les parties déviées de l'élément photosensible.

2. Dispositif d'éclairage par fente suivant la revendication 1, caractérisé en ce que les moyens d'entraînement (6, 31, 32) pour les galets déflecteurs (10, 11) comprennent une poulie ou un levier (31) fixé à l'arbre de l'un des galets déflecteurs à l'aide de moyens de fixation déconnectables, et une pièce guide sensiblement stationnaire (32) disposée en contact non glissant avec la poulie ou le levier (31) et au moins en grande partie parallèle au plan objet (2).

Fig 1

Fig 2

Fig 3